# EUROPÄISCHE PATENTANMELDUNG

(11) **EP 4 707 974 A2**
(43) Veröffentlichungstag der Anmeldung: **11.03.2026**
(21) Anmeldenummer: 26153589.2
(22) Anmeldetag: 28.02.2020
(51) Int. Cl.: G05B 19/418

(54) **VIRTUELLER SENSOR AUF EINER ÜBERGEORDNETEN MASCHINENPLATTFORM**

(30) Priorität: 27.03.2019 EP 19165483
(62) Teilanmeldung aus: 20710818.4
(71) Anmelder: Siemens Aktiengesellschaft, 80333 München (DE)
(72) Erfinder: Heckel, Udo, 91058 Erlangen (DE); Klein, Daniel, 90411 Nürnberg (DE); Geitner, André, 92256 Hahnbach (DE); Kaiser, Tim, 90766 Fürth (DE); Petzold, Daniel, 90766 Fürth (DE); de Faria Siqueira, Edison, 90403 Nürnberg (DE)
(74) Vertreter: Siemens Patent Attorneys

(57) **Zusammenfassung**

Die vorliegende Erfindung betrifft ein Verfahren zum Bereitstellen eines virtuellen Sensors in einem Automatisierungssystem einer industriellen Anlage. In einer Verarbeitungseinrichtung des Automatisierungssystems wird ein Messwert eines physikalischen Sensors, welcher einem physikalischen Parameter der industriellen Anlage entspricht, empfangen. Ein Datensatz, welcher durch ein Simulationsmodell erzeugt wurde, wird in der Verarbeitungseinrichtung bereitgestellt, wobei der Datensatz einen eindeutigen Zusammenhang zwischen möglichen Messwerten des physikalischen Sensors und zugehörigen Ausgabewerten des virtuellen Sensors herstellt. Anhand des Datensatzes und des empfangenen Messwerts, wird bestimmt welcher Ausgabewert des virtuellen Sensors zu dem empfangenen Messwert (20) gehört, und dieser wird nachfolgend auf einer Anzeigevorrichtung der industriellen Anlage angezeigt.

## Beschreibung

Die vorliegende Erfindung betrifft ein Verfahren für virtuelle Sensoren in einem Automatisierungssystem, und insbesondere ein Verfahren zum Bereitstellen virtueller Sensoren auf einer übergeordneten Maschinenplattform in einer industriellen Anlage, welche zur Ergänzung physikalischer Sensoren an der Anlage betrieben werden.

Weiter werden ein entsprechendes Automatisierungssystem und Computerprogramm bereitgestellt.

### Hintergrund

Um eine maschinelle Produktion in einer industriellen Anlage überwachen und steuern zu können, ist es erforderlich zahlreiche Messwerte an Maschinenkomponenten zu verarbeiten und diese dem Betreiber auf einer Maschinenplattform, d.h. einem der industriellen Anlage übergeordneten Hardware- und Software-Computersystem, bereitzustellen.

Entsprechend können bei herkömmlichen Verfahren Messdaten über physikalische Sensoren an den einzelnen Maschinenkomponenten erfasst werden. Dabei können physikalische Sensoren an Maschinenkomponenten angebracht werden, um Messdaten, z.B. über Steuergeräte, zu erfassen. Diese Messdaten können auf einem Human-Maschine-Interface (HMI) oder einer Plattform, beispielsweise einer übergeordneten Maschinenplattform wie einem Edge Computing System, bereitgestellt werden. Beispielsweise kann zur Messung der Temperatur an einem Motor dementsprechend ein geeigneter Temperatursensor an einer thermisch gut angebundenen Messstelle an dem Motor platziert sein.

Aus den Dokumenten US 2018/300124 A1, US 2016/098501 A1, Peter J Maloney ET AL: "Pneumatic and Thermal State Estimators for Production Engine Control and Diagnostics"(SAE Technical Paper Series - Electronic Engine Controls 1998), TOP PHILIP ET AL: "Integration of functional mock-up units into a dynamic power systems simulation tool" (2016 IEEE POWER AND ENERGY SOCIETY GENERAL MEETING (PESGM), IEEE, 17. Juli 2016), SHEIKHOLESLAMI RAZI ET AL: "Progressive Latin Hypercube Sampling: An efficient approach for robust sampling-based analysis of environmental models" (ENVIRONMENTAL MODELLING & SOFTWARE, ELSEVIER, AMSTERDAM, NL, Bd. 93, 23. März 2017) sind bereits Aspekte virtueller Sensoren bekannt.

Aus der Druckschrift US 2018/300124 A1 ist es bereits ein Maschinenlernverfahren einzusetzen, das aus den Messungen eines physikalischen Sensors lernt. US 2016/098501 A1 offenbart den Einsatz einer Simulation in direkter Verknüpfung mit einem physikalischen Sensor. Die Veröffentlichung von TOP PHILIP ET AL beschäftigt sich mit "Functional mock up units". Die Veröffentlichung von Peter J Maloney ET AL beschäftigt sich mit Modellen zur Bestimmung von Gaszuständen. Die Veröffentlichung von SHEIKHOLESLAMI RAZI ET AL beschäftigt sich mit Simulation im Allgemeinen.

Abhängig von Art und Ort der zu messenden Größe, kann dies jedoch aufwändige Sensoren und Messeinrichtungen erfordern. Zudem kann es vorkommen, dass ein Messwert nicht ermittelt werden kann, da die Messtechnik den eigentlichen Prozess-/Vorgang beeinflussen würde. Beispielsweise kann bei einer Messung der Strömungsgeschwindigkeit innerhalb einer Düse die Strömung maßgeblich durch den Messapparat beeinflusst werden.

Zudem kann bei einer Messung meist nur ein einzelner lokaler Wert erfasst werden kann, nicht aber ganze Felder. Jede geringfügige Änderung der Messposition führt zu einer Änderung des Messaufbaus, was eine aufwändige Neujustierung, einen Umbau und auch eine Neukalibrierung erforderlich machen kann. Zudem können ältere Maschinen und Anlagen meist nur mit sehr hohem Aufwand mit zusätzlicher Messtechnik ausgestattet werden.

Auf der anderen Seite werden bereits während der Maschinen-, Prozess- oder Produktentwicklung detaillierte digitale Simulationsmodelle erstellt und mit der Realität abgeglichen. Mit diesen digitalen Prototypen können nahezu alle physikalischen Größen, welche während der Simulation betrachtet werden, ohne aufwändige Sensoraufbauten bestimmt werden. Eine Variation der Messposition oder des Messaufbaus ist einfach und kostengünstig möglich und der eigentliche Prozess/Vorgang wird bei der Messung nicht beeinflusst.

Konventionelle Simulationsmodelle benötigen in der Regel eine hohe Rechenzeit von bis zu mehreren Stunden bis Tagen. Selbst kleinste Parameteränderungen an einem konventionellen Simulationsmodell führen deshalb dazu, dass lange Zeit auf die neuen Ergebnisse gewartet werden muss.

Ein Problem der Simulationsmodelle ist jedoch, dass die Anwendung der Simulationsmodelle eine lange Rechenzeit nach sich ziehen, meist nur Experten zugänglich sind, und oft in spezieller Expertensoftware entwickelt werden müssen.

Mit zunehmender Digitalisierung wurden neben physikalischen Sensoren auch virtuelle Sensoren oder sogenannte SoftSensoren entwickelt, welche eine weitere Möglichkeit darstellen, Messdaten einer industriellen Anlage zu bereitzustellen.

Virtuelle Sensoren können grundsätzlich über drei verschiedene Arten generiert werden. Zum einen ist eine rigorose Modellierung möglich, wobei eine Beschreibung über Gesetzmäßigkeiten, z.B. Naturgesetze oder auch über Simulationsmodelle, erfolgt. Des Weiteren können statistische Regressionsverfahren, wie zum Beispiel eine Ableitung von Regressionskurven aus bestehenden Datensätzen zur Anwendung gelangen. Zudem können Künstliche Intelligenz (KI)-Algorithmen beziehungsweise Clusteranalysen, welche ein Ableiten von Regeln und Gesetzmäßigkeiten aus vorhandenen Daten bereitstellen, eingesetzt werden.

Bei einem sogenannten "Model Order Reduction" Verfahren kann die Rechenzeit verkürzt werden. In einfachen Fällen gelingt dies so gut, dass das reduzierte Modell nahe Echtzeit auf Parameteränderungen reagieren kann. Werden explizit an einer Stelle die Messdaten an einem reduzierten Modell abgerufen, ergibt dies einen virtuellen Sensor, wie aus der Druckschrift "Comparison of model order reduction methods for optimal sensor placement for thermo-elastic models" von Benner, Herzog, Lang, Riedel und Saak, in Engineering Optimization, 51(3), 465-483, 2017, bekannt. In Fällen von Modellen mit einer Vielzahl von Parametern ist jedoch durch die längere Rechendauer eines Solvers für das Modell keine Echtzeitfähigkeit gegeben.

Weiterhin stellen bekannte Verfahren unter Verwendung eines sogenannten Functional Mock-Up Interface (FMI) eine Vereinfachung dar. Aufgrund der hohen Anzahl unterschiedlicher Simulationsdomänen (z.B. Strukturmechanik, Fluidik, Thermik) und der noch viel höheren Anzahl an unterschiedlichen Softwarepakten, welche bei domänenübergreifender Betrachtung technischer Systeme miteinander Simulationsdaten austauschen müssen, wurde das sogenannte Functional Mock-Up-Interface (FMI) ins Leben gerufen. Ziel ist es, ein einheitliches Format zu finden, das den Austausch von Simulationsmodellen/-daten zwischen den unterschiedlichen Softwarepaketen erlaubt und von einer Vielzahl an Softwarepaketen unterstützt wird. Diese Schnittstelle kann nicht nur dazu genutzt werden, um Simulationsmodelle auszutauschen, sondern es können auch Simulationsergebnisse in abstrahierter Form übertragen werden, was die Grundlage für virtuelle Sensoren auf Basis der FMI-Technologie darstellt.

Ein weiteres konventionelles Verfahren stellt das sogenannte Metamodel-of-Optimal-Prognosis (MOP) bereit. Gemäß dem MOP-Ansatz werden Simulationsdaten abstrahiert und in einer Functional Mock-Up Unit (FMU) abgebildet, wie aus dem Dokument "Metamodel of Optimal Prognosis-an automatic approach for variable reduction and optimal metamodel selection" von Most, Will in Proceedings of Weimarer Optimierungs-und Stochastiktage, 5, 20-21, 2008, bekannt. Gemäß dem MOP-Ansatz wird eine bestimmte Größe über möglichst wenige Simulationsparameter über ein geeignetes Simulationsmodell und eine Solver vorhergesagt, wobei ein MOP eine abschnittsweise definierte Funktion umfasst. Beispielsweise kann für ein Relais ermittelt werden, dass die Ankerposition des Relais mit 93% Genauigkeit vorhergesagt werden kann, wenn magnetische Flussdichte und Erregungsstrom der Spule bekannt sind. Das MOP der Ankerposition in Abhängigkeit von Flussdichte und Erregungsstrom kann in ein FMU transferiert werden, und über ein spezielles Interface auf einem Standard-PC mit real gemessenen Daten verbunden werden. Dabei werden die Daten des MOP über einen speziellen Solver abgerufen. Unter Verwenden des Metamodel-of-Optimal-Prognosis werden jedoch keine echtzeitfähigen virtuellen Sensoren über FMUs bereitgestellt, welche auf einer übergeordneten Maschinenplattform in einem Automatisierungssystem betrieben werden können, um die realen Messdaten von Maschinen und Komponenten zu ergänzen. Weiterhin ist es nicht möglich ein MOP ohne einen speziellen Solver zu verwenden, da gemäß dem MOP-Ansatz eine konventionelle Messung der Ankerposition bei bekannten Parametern durch Berechnung einer optimierten Simulation ersetzt wird, wobei auf Basis eines optimierten Simulationsmodells eine Ankerposition vorhergesagt wird. So setzt der MOP-Ansatz voraus, dass ein entsprechender Solver vorhanden ist, der in der Lage ist auf Basis der Eingangsmessgröße die Zielgröße auszugeben.

Es besteht daher Bedarf nach einem verbesserten Verfahren zum Bereitstellen eines virtuellen Sensors in einem Automatisierungssystem, welcher direkt auf einer übergeordneten Maschinenplattform neben realen physikalischen Sensoren betrieben werden kann, und eine verbesserte Echtzeitfähigkeit und einfachere Implementierung aufweist.

### Zusammenfassung

Diese Aufgabe wird mit den Merkmalen der unabhängigen Ansprüche gelöst. In den abhängigen Ansprüchen sind weitere Ausführungsbeispielen der Erfindung beschrieben.

Gemäß einem ersten Aspekt wird ein Verfahren zum Bereitstellen eines virtuellen Sensors in einem Automatisierungssystem einer industriellen Anlage bereitgestellt.

In einem ersten Schritt wird in einer Verarbeitungseinrichtung des Automatisierungssystems ein Messwert eines physikalischen Sensors, welcher einem physikalischen Parameter der industriellen Anlage entspricht, empfangen.

Die Verarbeitungseinrichtung kann Bestandteil einer der industriellen Anlage übergeordneten Maschinenplattform sein, insbesondere eines Edge Computing Systems. Die Verarbeitungseinrichtung des Automatisierungssystems kann eine anlagenunabhängige, oder systemunabhängige, Verarbeitungseinrichtung sein.

Der Messwert des physikalischen Sensors kann ein Wert einer physikalischen Messgröße der industriellen Anlage, d.h. ein Anlagenzustandswert sein, und kann somit einen physikalischen Zustand der industriellen Anlage beschreiben. Der physikalische Sensor kann der industriellen Anlage oder einer Maschinenkomponente der industriellen Anlage zugeordnet sein, und kann somit reale Messwerte eines physikalischen Zustandes der Anlage bereitstellen.

In einem weiteren Schritt wird in der Verarbeitungseinrichtung ein Datensatz bereitgestellt, welcher durch ein Simulationsmodell erzeugt wurde, und welcher einen Zusammenhang zwischen möglichen Messwerten des physikalischen Sensors und zugehörigen Ausgabewerten des virtuellen Sensors herstellt.

Zum Beispiel kann der Ausgabewert des virtuellen Sensors ein Wert einer physikalischen Messgröße der industriellen Anlage, welche nicht durch einen physikalischen Sensor gemessen wird, oder ein Anlagenzustandswert, sein, und kann somit einen Zustand oder eine Eigenschaft der industriellen Anlage beschreiben, in anderen Worten definieren.

Zum Beispiel kann der Datensatz jeweils einen der möglichen Messwerte des physikalischen Sensors mit einem zugehörigen Ausgabewert des virtuellen Sensors verknüpfen, oder in anderen Worten dem zugehörigen Ausgabewert zuordnen.

Zum Beispiel kann der Datensatz eine Vielzahl von möglichen Messwerten des physikalischen Sensors und eine Vielzahl von zugehörigen Ausgabewert des virtuellen Sensors umfassen, welche jeweils ein Messwert mit einem zugehörigen Ausgabewert paarweise miteinander verknüpft ist, so dass mittelseiner Lookup-Tabelle jedem Messwert einen zugehöriger Ausgabewert zugeordnet ist.

Zum Beispiel kann der Datensatz eine Zuordnungsvorschrift, welche eine eindeutige Zuordnung zwischen den Messwerten und den jeweiligen Ausgabewerten bereitstellt, umfassen. Eine derartige Zuordnungsvorschrift kann eine einfache Funktion sein, welche als Variable die Messgröße des physikalischen Sensors enthält, damit kann eine Berechnung ohne Simulation, d.h. ohne Solver-Funktion, beispielsweise durch eine Executable einer FMU erfolgen.

In einem weiteren Schritt wird in der Verarbeitungseinrichtung anhand des Datensatzes und anhand des empfangenen Messwerts bestimmt, welcher Ausgabewert des virtuellen Sensors zu dem empfangenen Messwert gehört.

Zum Beispiel wird unter Verwenden des Datensatzes dem Messwert des physikalischen Sensors ein Ausgabewert des virtuellen Sensors zugeordnet.

In einem weiteren Schritt, welcher in manchen Ausführungsbeispielen optional ist, wird der bestimmte Ausgabewert auf einer Anzeigevorrichtung angezeigt.

In manchen Ausführungsbeispielen kann das Automatisierungssystem, die übergeordneten Maschinenplattform, oder die industrielle Anlage die Anzeigevorrichtung umfassen. Das Anzeigen des bestimmten Ausgabewerts kann ein Anzeigen des empfangenen Messwertes umfassen.

In manchen Ausführungsbeispielen kann auch der empfangene Messwert des physikalischen Sensors auf der Anzeigevorrichtung angezeigt werden.

Das erfindungsgemäße Verfahren kombiniert somit reale Messdaten mit Simulationsmodellen durch virtuelle Sensoren, welche direkt auf einer übergeordneten Maschinenplattform neben den realen Messwerten betrieben werden können, und bringt somit die Vorteile von Simulationsmodellen in die reale Fabrik. Somit können die Daten einer "reduzierten Simulation" auf einer übergeordneten Plattform im Fabrikumfeld dargestellt werden, um reale Messdaten zu ergänzen, wodurch rigorose Modellierung und statistische Regressionsverfahren vereint werden können.

Die klassischen Meta-Modelle, insbesondere n-dimensionale Funktionen, lineare Funktionen, Tabellen oder technischen Grundgleichungen, welche der Datensatz umfassen kann, können herstellerunabhängig bereitgestellt werden, wodurch eine schnellere Implementierung in einem Automatisierungssystem vor Ort ermöglicht wird.

Durch die Verwendung einfacher Arten zur Wissensrepräsentation in dem Datensatz, zum Beispiel mathematische Modellierung durch Metamodelle oder lineare Funktionen, oder einfache Tabellen, wie Lookup-Tabellen, wird Echtzeitfähigkeit ermöglicht.

Erfindungsgemäß wird ein virtueller Sensor bereitgestellt, welcher ausgebildet ist, um auf einer übergeordneten Maschine Plattform betrieben zu werden.

Im Vergleich mit realen, daher physikalischen Sensoren ergeben sich somit die folgenden Vorteile.

Eine einfache Implementierung um neue Sensoren in einem Fabrikumfeld wird ermöglicht, wobei keine Prozessbeeinflussung in der industriellen Anlage stattfindet. Des Weiteren wird eine vergleichsweise schnelle Änderung der Messposition des virtuellen Sensors ermöglicht, wobei keine Neukalibrierung des Sensors erforderlich ist. Dies kann dadurch bereitgestellt werden, dass mindestens ein weiterer Datensatz in der Verarbeitungseinrichtung bereitgestellt wird, wobei der weitere Datensatz einer weiteren Messposition des virtuellen Sensors zugeordnet ist. Eine Messposition eines virtuellen Sensors entspricht dabei der Position des virtuellen Sensors, an welcher dieser entsprechend einer Simulation anhand eines Simulationsmodells an der industriellen Anlage angeordnet ist. Somit wird eine vergleichsweise schnelle Änderung der Messposition ermöglicht, wobei keine Neukalibrierung erforderlich ist. Zudem wird dadurch eine Messung von Werten, welche real nicht messbar wären, ermöglicht.

Im Vergleich zum Verfahren basierend auf Model Order Reduction ergeben sich somit folgende Vorteile.

Durch verwenden eines Standardformats für den Datensatz wird ein Betrieb auf vielen Plattformen und Software Tools möglich. Somit können virtuelle Sensoren unabhängig von der Simulationsdomäne bereitgestellt werden. Zudem kann ein virtueller Sensor reduziert auf einen einzelnen Sensorpunkt bereitgestellt werden. Weiterhin wird eine verbesserte Echtzeitfähigkeit der virtuellen Sensoren bei kleinen Parameteränderungen bereitgestellt.

Das erfindungsgemäße Verfahren stellt somit ein verbessertes Verfahren zum Bereitstellen eines virtuellen Sensors in einem Automatisierungssystem bereit, welcher direkt auf einer übergeordneten Maschinenplattform neben realen physikalischen Sensoren betrieben werden kenn, wobei das Verfahren eine verbesserte Echtzeitfähigkeit und einfachere Implementierung auf der übergeordneten Plattform aufweist.

In einigen Ausführungsbeispielen kann das Erzeugen des Datensatzes vor den anderen Schritten durchgeführt werden.

Bei dem Erzeugen des Datensatzes können in einem ersten Schritt unter Verwenden des Simulationsmodells eine Vielzahl von Ausgabewerten des virtuellen Sensors, basierend auf einem Variieren der möglichen Messwerte des physikalischen Sensors, über einen vorbestimmten Definitionsbereich hinweg, berechnet, d.h. simuliert, werden.

Vor Betrieb des virtuellen Sensors werden somit eine Vielzahl von Simulationen, zum Beispiel eine Simulation für jeden der möglichen Messwerte des physikalischen Sensors, durchgeführt, wobei die Ergebnisse der Simulationen die Ausgabewert für den virtuellen Sensor darstellen. Dabei können die möglichen Messwerte innerhalb eines Definitionsbereiches liegen, welcher den Bereich angibt, in welchem die möglichen Messwerte des physikalischen Sensors liegen können.

In einem weiteren Schritt können die Messwerte sowie die zugehörigen Ausgabewerte in einem Datensatz zusammengefasst werden, und abgespeichert werden.

In einigen Ausführungsbeispielen kann durch Fitfunktionen, oder statistische Regressionsverfahren basierend auf den Messwerten und Ausgabewerten, eine ein- bzw. mehrdimensionale Funktion an die diskreten Werte gefittet werden. In diesen Fall enthält der Datensatz die gefittete Funktion.

Das Erzeugen des Datensatzes kann durch einen Rechner durchgeführt werden, welcher nicht von dem Automatisierungssystem, der übergeordneten Maschinenplattform oder der industriellen Anlage umfasst ist. Insbesondere kann der Datensatz durch einen Rechner entfernt der industriellen Anlage erzeugt werden. In diesem Fall wird der Datensatz abgespeichert und an die Verarbeitungsvorrichtung übertragen, und in der Verarbeitungseinrichtung in einem dauerhaften Speicher gespeichert.

In einigen Ausführungsbeispielen kann der Datensatz nicht basierend auf einem Simulationsmodell erzeugt sein, und/oder eine oder mehrere technische Grundgleichungen enthalten.

Das Berechnen des Datensatzes kann ein Durchführen einer vorbestimmten Anzahl von Simulationen, bzw. Berechnungen, unter Verwenden des Simulationsmodells umfassen. Das Durchführen von Simulationen kann unter Verwenden eines Latin Hypercube Sampling Verfahrens oder eines Monte Carlo Sampling Verfahrens durchgeführt werden.

Bei dem Simulieren der Werte eines Datensatzes können sich die Ausgabewerte des virtuellen Sensors auf einen einzigen Sensorpunkt beziehen, welcher ein kritischer Punkt oder eine kritische Stelle des Simulationsmodells sein kann. Zum Beispiel können Simulationsparameter, welche einen Ort oder eine Stelle des Sensors an der industriellen Anlage festlegen, für welchen ein Zustand der Anlage simuliert werden soll, während der Simulation eines Datensatzes konstant gehalten werden. Dadurch können verschiedene Datensätze, welche jeweils auf einen anderen Ort des virtuellen Sensors zugeordnet sind, erzeugt werden.

Das Bereitstellen des Datensatzes kann ein Auslesen des Datensatzes aus einem dauerhaften Speicher der Verarbeitungseinrichtung umfassen.

Der Datensatz kann zumindest eines von folgenden Elementen umfassen: eine Lookup-Tabelle, eine lineare Funktion, eine n-dimensionale Funktion, eine technische Grundgleichung. Die genannten Elemente können den möglichen Messwerten des physikalischen Sensors jeweils einen zugehörigen Ausgabewert des virtuellen Sensors eindeutig zuordnen. In einigen Ausführungsbeispielen kann der Datensatz eine einzige, und/oder eine beliebige Kombination der genannten Elemente umfassen. Durch die Elemente, welche eine einfache Wissensrepräsentation darstellen, wird eine schnelle und echtzeitfähige Bestimmung der Werte des virtuellen Sensors ermöglicht.

Der Datensatz kann eine Functional Mock-Up Unit (FMU) sein. In manchen Ausführungsformen kann der Datensatzkann in einer oder als Functional Mock-Up Unit bereitgestellt werden. Dabei kann der Datensatz über eine Functional Mock-Up Interface (FMI-) Schnittstelle in der Verarbeitungseinrichtung eingebunden, bzw. betrieben werden. Eine Functional Mock-Up Unit kann dabei folgende Elemente umfassen: einen XML-Header, ein Executable, mindestens eine Library.

In der Functional Mock-Up Unit kann kein Solver enthalten sein und bei dem Betreiben der Functional Mock-Up Unit in der Verarbeitungseinrichtung kann kein Solver verwendet werden. Dadurch kann ermöglicht werden, dass Ausgabewerte des virtuellen Sensors mit reduziertem Rechenaufwand in Echtzeit bereitgestellt werden können.

Ein Verwenden des FMI-Standards für das Bereitstellen des virtuellen Sensors ermöglicht eine einfache Anwendbarkeit des Senders in verschiedenen Plattformen. Zudem ist ein virtueller Sensor aus nahezu allen Software Tools möglich, welche das FMI-Format unterstützen.

Erfindungsgemäße FMU sind aus einer Vielzahl an Systemen ausleitbar, beispielsweise aus Systemen, bei welchen Model Order Reduction noch nicht implementiert ist.

Der Ausgabewert des virtuellen Sensors kann durch den Messwert des physikalischen Sensors und durch den Datensatz vollständig, d.h. genau, bestimmt sein, wobei kein Solver notwendig ist. Von dem Fachmann wird verstanden, dass das erfindungsgemäße Verfahren nicht auf einen einzigen physikalischen Sensor limitiert ist, sondern dass eine beliebige Anzahl von physikalischen Sensoren an der industriellen Anlage angeordnet sein können, welche zur Bereitstellung eines virtuellen Sensors verwendet werden können.

Es ist somit zu verstehen, dass in einigen Ausführungsbeispielen mehrere physikalische Sensoren der industriellen Anlage zugeordnet sein können, welche zum welche zum Beispiel unterschiedliche physikalische Zustände und/oder einen physikalischen Zustand an unterschiedlichen Orten/Stellen der Anlage messen. Die mehreren Sensoren können jeweils einen Messwert an die Verarbeitungseinrichtung übertragen, welche die Messwerte empfängt. Dabei kann der Ausgabewert des virtuellen Sensors durch den Datensatz und zumindest einem weiteren Messwert von zumindest einem weiteren der mehreren physikalischen Sensoren, welche der industriellen Anlage zugeordnet sind, bestimmt sein. Entsprechend kann in der Verarbeitungseinrichtung je ein Messwert von mehreren physikalischen Sensoren empfangen werden, wobei in der Verarbeitungseinrichtung anhand des Datensatzes und der Messwerte der mehreren physikalischen Sensoren ein Ausgabewert des virtuellen Sensors, welcher den mehreren Messwerten der physikalischen Sensoren zugeordnet, und/oder eindeutig zugeordnet, ist, bestimmt wird. Dabei kann der Ausgabewert durch den Datensatz und durch die mehreren Messwerte der physikalischen Sensoren vollständig, oder genau, bestimmt sein.

Das Erzeugen des Datensatzes kann durch ein Rechengerät durchgeführt werden, welches nicht Bestandteil des Automatisierungssystems, oder nicht Bestandteil der übergeordneten Maschinenplattform, ist. Insbesondere kann das Rechengerät entfernt von dem Automatisierungssystem sein, oder angeordnet sein, wobei der Datensatz zum Speichern in einem dauerhaften, in anderen Worten nicht-flüchtigen, Datenspeicher in der Verarbeitungseinrichtung von dem Rechengerät an die Verarbeitungseinrichtung übertragen wird. Rechenaufwendige Simulationen können somit vor Betreiben des virtuellen Sensors durchgeführt werden, wodurch das Bereitstellen in der Verarbeitungseinrichtung einfach und schnell implementiert werden kann.

Gemäß einem weiteren Aspekt wird ein Automatisierungssystem einer industriellen Anlage bereitgestellt, welches zum Bereitstellen eines virtuellen Sensors ausgebildet ist. Das Automatisierungssystem umfasst mindestens einen physikalischen Sensor, welcher der industriellen Anlage zugeordnet ist. Weiter umfasst das Automatisierungssystem eine Verarbeitungseinrichtung, welche konfiguriert ist, um die folgenden Schritte durchzuführen.

In einem ersten Schritt wird ein Messwert von dem physikalischen Sensor, welcher einem physikalischen Parameter der industriellen Anlage entspricht, empfangen. In einem weiteren Schritt wird ein Datensatz in der Verarbeitungseinrichtung bereitgestellt, welche durch ein Simulationsmodell erzeugt wurde, welches einen Zusammenhang zwischen möglichen Messwerten des physikalischen Sensors und zugehörigen Ausgabewert des virtuellen Sensors herstellt. In einem weiteren Schritt wird in der Verarbeitungseinrichtung anhand des Datensatzes und anhand des empfangenen Messwerts bestimmt, welcher Ausgabewert des virtuellen Sensors zu dem empfangenen Messwert gehört.

Das Automatisierungssystem umfasst eine Anzeigevorrichtung, welche konfiguriert ist, um den bestimmten Ausgabewert anzuzeigen. In einigen Ausführungsbeispielen kann die Anzeigevorrichtung optional sein.

Das Automatisierungssystem kann weiter konfiguriert sein, ein Verfahren gemäß der unter dem ersten Aspekt der Erfindung beschriebenen Merkmale auszuführen.

Gemäß einem weiteren Aspekt wird ein Computerprogramm bereitgestellt, welches Befehle umfasst, welche bei der Ausführung des Programms durch eine Rechenvorrichtungen diese veranlassen, das Verfahren gemäß den unter dem ersten Aspekt der Findung beschriebenen Merkmalen auszuführen.

Für ein solches Automatisierungssystem und Computerprogramm zum Bereitstellen eines virtuellen Sensors können technische Effekte erzielt werden, welche den technischen Effekten entsprechen, wie sie für das Verfahren zum Bereitstellen eines virtuellen Sensors beschrieben wurden.

Obwohl spezifische Merkmale in der vorstehenden Zusammenfassung und der nachfolgenden detaillierten Beschreibung im Zusammenhang mit diversen Aspekten und Ausführungsbeispielen der vorliegenden Erfindung beschrieben werden, ist zu verstehen, dass die spezifischen Merkmale der Aspekte und exemplarischen Ausführungsbeispiele nicht nur in den jeweils entsprechenden explizit dargelegten Kombinationen, sondern auch in weiteren Kombinationen oder isoliert verwendet werden können, sofern nicht ausdrücklich anders angegeben.

Die obige Zusammenfassung soll daher nur einen kurzen Überblick über einige Merkmale einiger Ausführungsbeispiele und Implementierungen geben und ist nicht als Einschränkung zu verstehen.

### Kurze Beschreibung der Figuren

Im Folgenden wird die vorliegende Erfindung anhand bevorzugter Ausführungsbeispiele mit Bezug zu den folgenden Figuren näher erläutert.

Dabei bezeichnen in den Figuren gleiche Bezugszeichen gleiche oder ähnliche Elemente. Die Figuren sind schematische Darstellungen verschiedener Ausführungsbeispiele der Erfindung, wobei die in den Figuren dargestellten Elemente nicht notwendigerweise maßstabsgetreu dargestellt sind. Vielmehr sind die verschiedenen in den Figuren dargestellten Elemente derart wiedergegeben, dass ihre Funktion und genereller Zweck für den Fachmann verständlich wird.
- Figur 1: zeigt ein Flussdiagramm mit Schritten zur Bereitstellung eines virtuellen Sensors, gemäß Ausführungsbeispielen der Erfindung;
- Figur 2: zeigt eine schematische Darstellung eines Automatisierungssystems zum Bereitstellen eines virtuellen Sensors, gemäß Ausführungsbeispielen der Erfindung;
- Figur 3: zeigt einen schematischen Aufbau eines Simulationsmodells, gemäß Ausführungsbeispielen der Erfindung; und

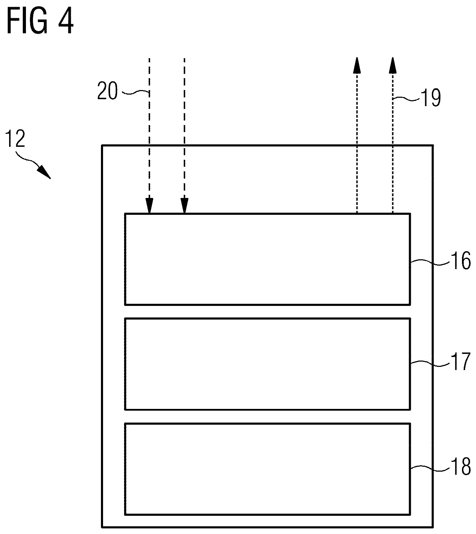

- Figur 4: zeigt einen schematischen Aufbau einer Functional Mock-Up Unit, gemäß Ausführungsbeispielen der Erfindung.

### Detaillierte Beschreibung von Ausführungsbeispielen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, welche im Zusammenhang mit den Figuren näher erläutert werden.

Dabei ist für den Fachmann erkenntlich, dass die Beschreibung der Ausführungsbeispiele nicht im in einem beschränkenden Sinne zu verstehen ist. Der Umfang der Erfindung wird nicht durch die im Folgenden beschriebenen Ausführungsbeispielen oder durch die Figuren eingeschränkt, welche nur zur Veranschaulichung dienen.

Die Figuren sind als schematische Darstellungen zu betrachten. Jede Verbindung oder Kopplung zwischen Funktionsblöcken, Vorrichtungen, Komponenten, Modulen oder anderen in den Figuren dargestellten oder hierin beschriebenen physikalischen oder funktionellen Einheiten kann auch durch eine direkte oder indirekte Verbindung oder Kopplung realisiert werden. Eine Kopplung zwischen den Komponenten kann drahtgebunden oder über eine drahtlose Verbindung hergestellt werden. Funktionsblöcke, Rechenvorrichtungen, Module oder Einheiten können in Hardware, Firmware, Software oder einer Kombination davon implementiert werden.

Nachfolgend werden verschiedene Techniken für virtuelle Sensoren in einem Automatisierungssystem, insbesondere Techniken zum Bereitstellen virtueller Sensoren, welche zur Ergänzung realer Messdaten auf einer Produktions- oder Maschinenanlage übergeordneten Maschinenplattform betrieben werden, beschrieben.

Die Anforderungen an moderne Maschinen und Anlagen steigen kontinuierlich in allen Branchen. Automatisierungssysteme werden eingesetzt, um technische Vorgänge in Maschinen, Anlagen oder technischen Systemen zu automatisieren.

Um eine maschinelle Produktion überwachen und steuern zu können, ist es erforderlich zahlreiche Messwerte an Maschinenkomponenten zu verarbeiten und diese dem Betreiber auf einer Plattform, d.h. einem Hardware- und Software-Computersystem, bereitzustellen.

Entsprechend herkömmlichen Verfahren können Messdaten über physikalische Sensoren an den einzelnen Maschinenkomponenten erfasst werden. Dabei können physikalische Sensoren an Maschinenkomponenten angebracht werden, um Messdaten, z.B. über Steuergeräte, zu erfassen. Diese Messdaten können auf einem Human-Maschine-Interface (HMI) oder einer übergeordneten Plattform, beispielsweise einer Maschinenplattform, insbesondere einem Edge Computing System, oder einem SIMATIC Edge System, bereitgestellt werden. Beispielsweise kann zur Messung der Temperatur an einem Motor dementsprechend ein geeigneter Temperatursensor an einer thermisch gut angebundenen Messstelle an dem Motor platziert werden.

Auf der anderen Seite werden bereits während der Maschinen-, Prozess- oder Produktentwicklung detaillierte digitale Simulationsmodelle erstellt und mit der Realität abgeglichen. Mit diesen digitalen Prototypen können nahezu alle physikalischen Größen, die während der Simulation betrachtet werden, ohne aufwändige Sensoraufbauten bestimmt werden. Eine Variation der Messposition oder des Messaufbaus ist einfach und kostengünstig möglich und der eigentliche Prozess/Vorgang wird bei der Messung nicht beeinflusst.

Ein Simulationsmodell, insbesondere ein Simulationsmodell für 3D-Simulationen, welche oft Finite Element Method (FEM)-Simulationen umfassen, beinhaltet meist eine Vielzahl, oder ein System, von Differentialgleichungen, gegebenenfalls mit Randbedingungen, welche, um in Quasi-Echtzeit Ergebnisse zu liefern, in möglichst kurzer Zeit gelöst werden. Um ein derartiges Modell zu simulieren, muss ein sogenannter Solver das System von Differentialgleichungen lösen. Zum Beispiel verwendet ein Computer oder Computersystem eine Solverfunktion, welche in dem Computer, oder Computersystem, oder in einer FMU, enthalten sind, um Lösungen für diese Gleichungen in verschiedenen Zeitintervallen zu berechnen, die die Zustände und Ausgaben des Modells über einen bestimmten Zeitraum liefert.

Mit zunehmender Digitalisierung wurden neben physikalischen Sensoren auch virtuelle Sensoren oder Softsensoren entwickelt, welche eine weitere Möglichkeit darstellen, an Messdaten zu gelangen.

Ein Softsensor, auch virtueller Sensor genannt, ist kein real existierender Sensor, sondern eine Abhängigkeitssimulation von stellvertretenden Messgrößen zu einer Zielgröße. Somit wird die Zielgröße nicht direkt gemessen, sondern anhand zu ihr korrelierender Messgrößen und eines Modells der Korrelation berechnet.

Virtuelle Sensoren bilden die Abhängigkeit von korrelierenden Messgrößen zu einer Zielgröße ab. Entsprechend wird die Zielgröße nicht mit physikalischen Sensoren bestimmt, sondern anhand der Zusammenhänge zu anderen Messgrößen. Dabei spiegelt der virtuelle Sensor wie bei einer Simulation den Umgebungszustand wider, um für jeden Zustand der Hardware-Messsensoren den dazugehörigen Ist-Wert der Zielgröße zu berechnen. Die Zielgröße muss dabei keineswegs eine physikalische Größe sein, sondern kann auch ein Kennwert, eine Tendenz oder eine abstrakte Größe sein.

Bei bekannten Verfahren unter Verwenden des Functional Mock-Up Interface (FMI) können Simulationsmodelle und auch Simulationsergebnisse in abstrahierter Form übertragen werden, was die Grundlage für virtuelle Sensoren auf Basis der FMI-Technologie darstellt. FMUs können auf einer übergeordneten Maschinenplattform, wie beispielsweise einem Edge Computing System einer industriellen Produktionsanlage betrieben werden und dort mit realen Messdaten verbunden werden.

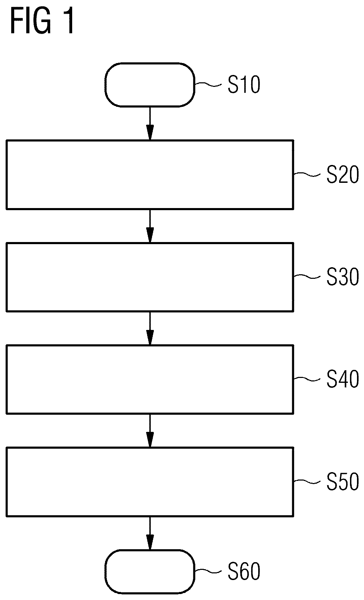

Figur 1 zeigt ein Flussdiagramm mit Schritten zur Bereitstellung eines virtuellen Sensors, gemäß Ausführungsbeispielen der Erfindung.

Das Verfahren startet in Schritt S10. In Schritt S20, wird in einer Verarbeitungseinrichtung des Automatisierungssystems ein Messwert eines physikalischen Sensors, welcher einem physikalischen Parameter der industriellen Anlage entspricht, empfangen.

In Schritt S30 wird in der Verarbeitungseinrichtung ein Datensatz bereitgestellt, welcher durch ein Simulationsmodell erzeugt wurde, und welcher einen Zusammenhang zwischen möglichen Messwerten des physikalischen Sensors und zugehörigen Ausgabewerten des virtuellen Sensors herstellt.

In Schritt S40 wird in der Verarbeitungseinrichtung anhand des Datensatzes und anhand des empfangenen Messwerts bestimmt, welcher Ausgabewert des virtuellen Sensors zu dem empfangenen Messwert gehört. In anderen Worten wird unter Verwenden des Datensatzes dem Messwert des physikalischen Sensors ein Ausgabewert des virtuellen Sensors zugeordnet.

In Schritt S50 wird der bestimmte Ausgabewert auf einer Anzeigevorrichtung angezeigt. Das Verfahren endet in Schritt S60.

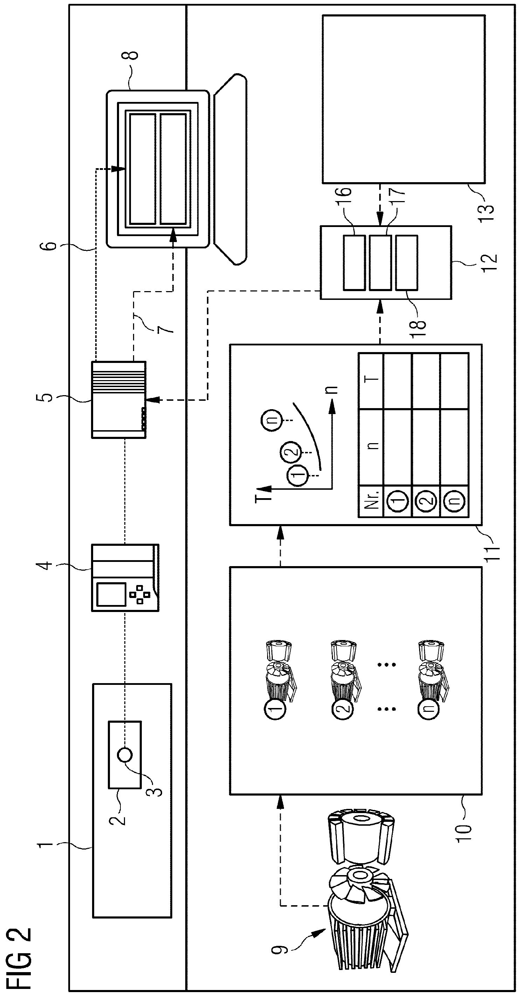

Figur 2 zeigt eine schematische Darstellung eines Automatisierungssystems 100 zum Bereitstellen eines virtuellen Sensors, gemäß Ausführungsbeispielen der Erfindung.

Wie in Fig. 2 zu sehen, ist ein Automatisierungssystem 100 einer industriellen Anlage 1 konfiguriert, um reale Messdaten 6 sowie virtuelle Messdaten 7 bereitzustellen. Eine industrielle Anlage 1, welche eine reale Maschine bzw. Anlage umfasst, beinhaltet eine Maschinenkomponente 2, an welcher zumindest ein physikalischer Sensor 3 angeordnet ist.

Um während eines Prozesses der industriellen Anlage 1 Messdaten zu erhalten, werden unter Verwenden von geeigneten physikalischer Sensoren 3 im Messbereich der industriellen Anlage 1 reale Messdaten 6 bereitgestellt. Beispielsweise kann eine Messung einer Motordrehzahl durch einen physikalischen Sensor 3 durchgeführt werden.

Der mindestens eine physikalische Sensor 3 ist mit mindestens einem Controller 4 verbunden. Abhängig vom Messprinzip des physikalischen Sensors 3 werden Signale des Sensors an den Controller 4 weitergegeben und dort in einen Messwert, bzw. Messwerte, umgerechnet. Der Controller, welcher mit einer Verarbeitungsvorrichtung 5 einer übergeordneten Maschinenplattform verbunden ist, stellt basierend auf den Signalen des Sensors Messwerte an die Verarbeitungsvorrichtung 5 bereit. Somit werden die Messwerte an die Verarbeitungsvorrichtung 5 übertragen und in der übergeordneten Plattform gesammelt.

Die Verarbeitungsvorrichtung 5 ist zur Visualisierung der realen Messdaten 6 mit einer Anzeigevorrichtung 8 verbunden. In der Anzeigevorrichtung können die realen Messdaten 6 dann anwenderspezifisch visualisiert werden. Hierbei können unterschiedliche Systeme, wie etwa WinCC, ein Web Browser oder auch ein Dashboard zum Einsatz kommen.

Wie bereits beschrieben, hat das herkömmliche Verfahren zur Messdatengewinnung mit physikalischen Sensoren 3 einige Nachteile, wie z.B. hohe Kosten, Beeinflussung des Prozesses, möglicherweise hohen Aufwand bei Neupositionierung, etc. Erfindungsgemäß wird eine verbesserte echtzeitfähige Möglichkeit bereitgestellt, wie diese realen Messdaten 6 durch virtuelle Sensoren ergänzt oder teilweise sogar ersetzt werden können.

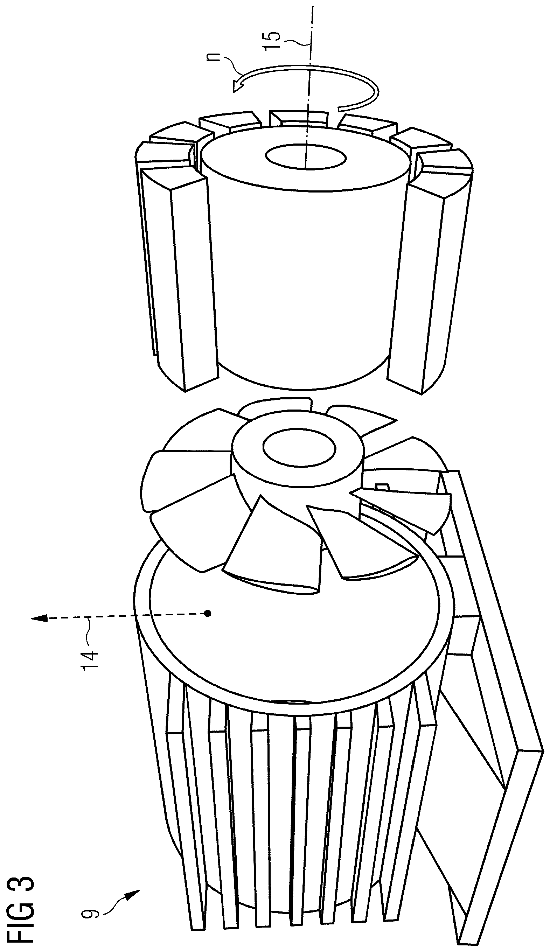

Figur 3 zeigt einen schematischen Aufbau eines Simulationsmodells 9, gemäß Ausführungsbeispielen der Erfindung. Das Simulationsmodell 9 des zu messenden Objekts, z.B. einer Maschinenkomponente 2 einer industriellen Anlage 1, bildet die Grundlage dieser neuen Möglichkeit, virtuelle Sensoren in einer Fabrikumgebung bereitzustellen.

Wie in Figur 3 dargestellt, ist das Simulationsmodell 9, oder digitaler Prototyp, der Anlage 1, oder der Maschinenkomponente 2, so aufgebaut, dass die virtuell zumessende Größe, d.h. die Ausgangsgröße 15, eine Systemantwort des Simulationsmodells 9 ist auf eine Eingangsgröße 15, beispielsweise einer Drehzahl n ist. Wenn beispielsweise die Temperatur an einer Stelle des Objekts virtuell gemessen soll, ist Berechnungsergebnis der Simulation beispielsweise die Temperatur an dieser Stelle.

Dabei stellt das Simulationsmodell 9 einen Zusammenhang zwischen der virtuell gemessenen Größe 14 (z.B. Temperaturwert an bestimmter Stelle) und einer später real gemessenen Größe 15 (z.B. Drehzahl n) her. Für den beispielhaft abgebildeten Fall bedeutet dies, dass im Simulationsmodell 9 ein Zusammenhang zwischen der Drehzahl n und der Temperatur herstellbar ist. Zudem ist die Eingangsgröße 15 in dem Bereich variabel, in dem sich die spätere reale Messgröße der physikalischen Messung durch einen Sensor bewegt, d.h. wenn der Motor im Betrieb eine Drehzahl von 0 bis 6500 min-1 erreicht, sind diese Werte auch im Simulationsmodell 9 einstellbar.

Wie in Figur 1 weiter dargestellt, werden basierend auf dem Simulationsmodell 9 eine Vielzahl von Simulationsläufen 10 durchgeführt. Die Simulationsläufe 10 werden in Abhängigkeit von real gemessenen Messwerten 15, zum Beispiel der Drehzahl n, oder anderen bekannten oder berechneten Größen, durchgeführt.

Derart kann das Simulationsmodell 9 das gesamte Verhalten der Eingangsgröße 15, und der Ausgangsgröße 14, deren Werte die Ausgabewerte des virtuellen Sensors darstellen, bei variierender Eingangsgröße 15 ermittelt werden. Dazu wird für eine zu definierende Anzahl an Simulationen, beispielsweise n=100 Simulationen, ein Versuchsplan aufgestellt, beispielsweise unter Verwenden von Latin Hypercube Sampling oder Monte Carlo Sampling, bei welchem die Eingangsgrößen im Definitionsbereich, beispielsweise von 0 min-1 bis 6500 min-1, variiert werden. Im Anschluss über jeden Simulationslauf wird die Systemantwort, beispielsweise die Temperatur ermittelt. Die somit durch die Simulationsläufe 10 gewonnenen Daten beschreiben am Ende den kompletten Zusammenhang zwischen der den möglichen Werten der später real gemessenen Eingangsgröße 15 des Simulationsmodells 9, im Beispiel der Drehzahl, und der virtuell ermittelten Ausgangsgröße 14 des Simulationsmodells 9, im Beispiel der Temperatur, im Definitionsbereich der Eingangsgröße 15.

Diese Daten können nun in einem Datensatz 11 in eine Form gebracht werden, welcher später schnell und effizient verarbeitet werden kann. Dies kann einerseits ein einfacher Funktionsgraph oder eine Tabelle sein, insofern lediglich eine Eingangs- und eine Ausgangsgröße vorhanden sind. Es kann allerdings auch erforderlich sein, dass ein Meta-Modell oder eine n-dimensionale Funktion erzeugt wird, wenn n Eingangs- und n Ausgangsgrößen vorhanden sind.

Die gewonnene Repräsentation der Ergebnisse kann weiterhin in einem Standardformat, insbesondere dem Functional Mock-Up Interface (FMI), bzw. in einer Speziellen Functional Mock-Up Unit (FMU) 12 abgespeichert werden.

Figuren 3 zeigten einen schematischen Aufbau einer Functional Mock-Up Unit (FMU) 12, gemäß Ausführungsbeispielen der Erfindung.

Wie in den Figuren 2 und 3 dargestellt, besteht diese FMU 12 grundsätzlich aus drei wesentlichen Bestandteilen: einem XML-Header 16 zur Definition der Eingangs- und Ausgangsvariablen sowie für Meta-Informationen, der Executable 17 mit dem Programmcode und der Library 18, welche beispielsweise Software-Bibliotheken und Ähnliches enthält. Dadurch kann eine FMU 12 in der Regel autonom betrieben werden. Eine FMU kann herkömmlich einen Solver, eine Solver-Funktion, für die Simulation von Simulationsmodellen enthalten, welche das Lösen von einem System von partiellen Differentialgleichungen ermöglichen.

Wie in Figur 3 weiter zu sehen, ist die FMU 12 derart aufgebaut, dass es möglich ist, über die Vorgabe einer Eingangsvariablen 20, welche beispielsweise der Eingangsgröße 15 entsprechen kann, möglichst schnell einen Output-Wert der Ausgangsvariablen 19, welche beispielsweise der Ausgangsgröße 14 entsprechen kann, zu erhalten. Für das gezeigt Beispiel wäre die Eingangsvariable 20 die vorgegebene Drehzahl, die an die Executable 17 weitergeleitet wird. In der Executable 17 wird, abhängig von der gewählten Wissensrepräsentation, direkt ein Wert auf Basis eines Programmcodes der Executable 17 oder mit Zugriff auf die Libraries 18, in welchen der Datensatz 11 gespeichert sein kann, ein Wert für die Temperatur ermittelt und vom FMU 12 über den Output 19 ausgegeben. Wie genau dieser Vorgang im Detail abläuft, ist abhängig von der Art wie die Ergebnisse repräsentiert werden.

Neben dieser Möglichkeit, eine FMU 12 auf Basis bestehender Simulationen durch ein Simulationsmodell 9 zu erstellen, gibt es auch den Weg im FMU technische Grundgleichungen zu hinterlegen.

Wie in Figur 2 zu sehen, kann in der FMU 12 auch mindestens ein Datensatz 13 umfassend eine technische Grundgleichung, oder vorbestimmte Werte oder Parameter der industriellen Anlage 1, oder von einer oder mehreren Maschinenkomponenten 2, gespeichert sein. Dies kann beispielsweise die nominelle Lagerlebensdauer für die Lagerung im Motor sein. Wird diese Gleichung so umgewandelt, dass sie nur noch von Parametern abhängig ist, die am Prüfstand real (oder auch virtuell) gemessen werden und diese FMU 12 auf der übergeordneten Plattform betrieben, kann auch auf diese Weise der reale Messdatensatz ergänzt werden.

Üblicherweise werden derartige FMUs 12 zwischen verschieden Simulationstools ausgetauscht. Allerdings können auch andere Softwaretools FMUs 12 aufrufen und als sogenannter "Master" dienen, wenn der FMU 12 in geeigneter Weise aufgebaut wurde.

In diesem Fall kann eine FMU 12 auch auf einer übergeordneten Plattform, insbesondere in einer Verarbeitungseinrichtung 5 einer übergeordneten Maschinenplattform, welche von der industriellen Anlage 1 unabhängig sein kann, zur Verarbeitung der realen Messdaten 6 betrieben werden. Auf dieser Plattform besteht dann die Möglichkeit die realen Messdaten 6 von den physikalischen Sensoren 3 mit der speziell aufgebauten FMU 12 zu koppeln und die FMU 12 als "virtuelle Sensor" zu betreiben, der auf Basis der realen Messwerte 6 direkt die virtuellen Messwerte 7 ausgibt.

Eine übergeordnete Plattform kann dabei eine übergeordnete Maschinenplattform sein, insbesondere ein Edge Computing System, welches Maschinen bzw. Anlagen 1 mit physikalischen Sensoren 3 und Controllern 4 zur Signalverarbeitung, übergeordnet ist. In einigen Ausführungsbeispielen kann der virtuelle Sensor demnach in einem Edge Device eines Edge Computing Systems einer industriellen Anlage bereitgestellt werden.

Ein Beispiel für eine derartige übergeordnete Maschinenplattform ist Siemens Industrial Edge. Siemens Industrial Edge umfasst das Edge Management System, eines oder mehrere Edge-Geräte, und Edge Apps, welche auch den Edge-Geräten betrieben werden. Mit dem Edge Management System lassen sich alle verbundenen Edge-Geräte zentral steuern und die Zustände der industriellen Anlage 1 überwachen. Anwender können über das Edge Management System Software-Applikationen (Edge Apps) aus dem Edge App Store des Backend-Systems, etwa MindSphere, in den gewünschten Edge-Geräten installieren.

Ein Simatic Edge Device, welches beispielweise der Verarbeitungsvorrichtung 5 entsprechen kann, ist eine Hardware-Komponente der Siemens Industrial Edge Plattform, welche direkt an einer Maschine, d.h. an einer industriellen Anlage betrieben werden kann und z.B. Datenverarbeitung oder Datenweiterleitung ermöglicht. Siemens Industrial Edge kann Automatisierungssysteme um maschinennahe Datenverarbeitung erweitern und so das Cloud Computing mit dem offenen IoT-Betriebssystem »MindSphere« ergänzen. Dementsprechend erfasst und verarbeitet das Simatic Edge Device als Hardware-Plattform für Edge-Applikationen große Datenmengen, insbesondere Daten von physikalischen Sensoren, unmittelbar an der Maschine. Das Edge Device ist durch integrierte Connectivity zur Automatisierung an der Maschine angeschlossen. Produktionsdaten, insbesondere Daten physikalischer Sensoren, lassen sich dadurch direkt in der Fertigung erfassen und verarbeiten. Somit ermöglicht Siemens Industrial Edge das Installieren und Aktualisieren von Software-Apps aus einem zentralen Edge-Management-System auf dem Edge Device. Wenn sich die Rahmenbedingungen der Industrie-Anwendung ändern, lassen sich Software-Apps in dem Edge Device anpassen. Somit verringern sich durch die übergeordnete Maschinenplattform die Speicher- und Übertragungskosten von Daten, weil große Datenmengen vorverarbeitet werden und anschließend nur relevante Daten in eine Cloud- oder firmeneigene IT-Infrastruktur gelangen.

Zusammenfassend wird ein virtueller Sensor in einem Automatisierungssystem bereitgestellt. Insbesondere wird in Ausführungsbespielen eine sogenannte FMU-App auf der Edge-Plattform betrieben, welche grundsätzlich konfiguriert ist, eine FMU als virtuellen Sensor auf einem Edge Computing System, wie der Simatic Edge, zu betreiben. Dazu kann die Standard FMU-Schnittstelle vieler Software-Tools, zumeist 1D-Simulationen, verwendet werden, wobei herkömmlicherweise eine FMU benötigt wird, die auch einen Solver für eine Co-Simulation beinhaltet, und daher für rechenaufwändige 3D-Simulationen meist nicht geeignet ist. In solchen Fällen können die Modelle sehr groß sein, oder das Lösen im FMU kann sehr lange dauern. Entsprechend dem erfindungsgemäßen Verfahren kann ein FMU derart aufgebaut werden, damit es selbst bei aufwändigen 3D-Simulationen auch ohne Solver auskommt und dabei auch noch schnell, idealerweise in Echtzeit, Ergebnisse liefert. Dazu wird die Simulation mehrfach in Abhängigkeit von den real gemessenen Größen laufen gelassen, mit dem Ergebnis, wie sich die Antwortgröße, d.h. der Sensor, verhält. Dieses Verhalten wird z.B. in eine Funktion, ein Meta-Modell oder einen einfachen Datensatz zusammengefasst und wiederum im FMU-Format untergebracht. Der so aufgestellte FMU kann ohne Solver und in hoher Geschwindigkeit auf der Edge als virtueller Sensor betrieben werden.

Der erfindungsgemäße virtuelle Sensor kann über den FMI-Standard implementiert werden und ist derart ausgestaltet, dass er auf einer übergeordneten Plattform betrieben werden kann. Innerhalb des virtuellen Sensors wird das Wissen nur durch eine einfache Wissensrepräsentation repräsentiert bzw. abgespeichert, welche insbesondere eine Lookup-Tabelle mit Ergebnissen im Voraus durchgeführten Simulationen, eine oder mehrere Tabellen mit Simulationsdaten, einen Funktionsgraphen, oder eine technische Grundgleichung umfassen.

Durch die erfindungsgemäßen Techniken können bei Komponenten, zum Beispiel Motoren, physikalische Sensoren eingespart werden, wodurch eine Reduktion der Fertigungskosten und geringere Ausfallwahrscheinlichkeit aufgrund eines Sensordefekts ermöglicht werden.

Ebenso ist basierend auf den erfindungsgemäßen Techniken ein zusätzliches Service-/Lizenzmodell für eine übergeordnete Maschinenplattform möglich.

Insbesondere können virtuelle Sensoren auf einer derartigen Plattform bereitgestellt werden. Ein Kunde hat die Möglichkeit die Sensoren nach Bedarf hinzuzuschalten, um seine Maschine zu überwachen und zusätzliche Messdaten zu generieren, ohne Umbauten oder sonstige Änderungen an der Anlage vornehmen zu müssen.

Andere Komponentenhersteller können nur den Betreiber der übergeordneten Maschinenplattform auf diese Plattform gelangen, wofür Lizenzen vergeben werden können. Dies könnten in dem obigen Beispiel nicht nur Motorenhersteller, sondern z.B. auch Lagerhersteller sein.

Der Betreiber der übergeordneten Maschinenplattform kann für Original Equipment Manufacturer (OEM) von Maschinen oder Maschinenkomponenten virtuelle Sensoren entwickeln, die die OEM wiederum ihren Kunden anbieten.

Derart könnten Maschinenkomponenten inklusive virtueller Sensoren einem Kunden bereitgestellt werden, wobei eine übergeordnete Edge-Plattform als übergeordnete Plattform einen weiteren Vorteil für den Kunden des OEM darstellt.

Hersteller von Anlagen oder Anlagenkomponenten können Verbesserung in bestehenden Entwicklungen realisieren, indem durch virtuelle Sensoren mehr Daten an den Komponenten/Anlagen erfasst werden. Dadurch kann sich beispielsweise ein größerer Datensatz für Closed Loop Analytics ergeben.

Eine Nutzung ohnehin vorhandener Simulationsdaten und damit bessere Ausnutzung bestehender Daten wird somit ermöglicht.

Somit kann die Effizienz, Flexibilität und Wirtschaftlichkeit von Automatisierungsanlagen durch das Betreiben von virtuellen Sensoren, insbesondere auf einer übergeordneten Maschinenplattform, während der Produktion, sowie in Hinsicht auf kurzfristig erforderliche kleine Änderungen an der industriellen Anlage, gesteigert werden.

## Patentansprüche

1. Verfahren zum Bereitstellen eines virtuellen Sensors in einem Automatisierungssystem (100) einer industriellen Anlage (1), mit den folgenden Schritten:
- Berechnen eines Datensatzes (11) unter Verwenden eines Simulationsmodells (9) wobei der Datensatz (11) Ausgabewerten (19) basierend auf einem Variieren möglicher Messwerte (20) eines physikalischen Sensors (3) über einen vorbestimmten Definitionsbereich umfasst; und
- Abspeichern des Datensatzes (11) in der Verarbeitungseinrichtung (5),
wobei der Datensatz (11) einen Zusammenhang zwischen möglichen Messwerten (20) des physikalischen Sensors (3) und zugehörigen Ausgabewerten (19) des virtuellen Sensors herstellt;
- Empfangen, in einer Verarbeitungseinrichtung (5) des Automatisierungssystems (100), von einem Messwert (20) eines physikalischen Sensors (3), welcher einem physikalischen Parameter der industriellen Anlage (1) entspricht;
- Bereitstellen des Datensatzes (11) in der Verarbeitungseinrichtung (5);
- Bestimmen, in der Verarbeitungseinrichtung (5), anhand des Datensatzes (11) und anhand des empfangenen Messwerts (20), welcher Ausgabewert (19) des virtuellen Sensors zu dem empfangenen Messwert (20) gehört; und
- Anzeigen, auf einer Anzeigevorrichtung (8), des bestimmten Ausgabewertes (19).

2. Verfahren nach Anspruch 1, wobei das Berechnen des Datensatzes (11) ein Durchführen einer vorbestimmten Anzahl von Berechnungen unter Verwenden des Simulationsmodells (9) und unter Verwenden eines Latin Hypercube Sampling Verfahrens oder eines Monte Carlo Sampling Verfahrens umfasst.

3. Verfahren nach einem der vorhergehenden Ansprüche, wobei der Schritt des Bereitstellens des Datensatzes vorsieht, dass beim Simulieren der Werte des Datensatzes sich die Ausgabewerte des virtuellen Sensors auf einen einzigen Sensorpunkt beziehen, derart, dass während der Simulation des Datensatzes Werte betreffend den Sensorpunkt konstant festgesetzt werden, wobei der Sensorpunkt einem bestimmten Ort des virtuellen Sensors zugeordnet ist, so dass sich die Ausgabewerte (19) des virtuellen Sensors auf einen einzigen Sensorpunkt beziehen.

4. Verfahren nach einem der vorhergehenden Ansprüche, wobei das Bereitstellen des Datensatzes (11) ein Auslesen des Datensatzes aus einem dauerhaften Speicher der Verarbeitungseinrichtung (5) umfasst, und wobei der Datensatz (11) zumindest eines von folgenden Elementen umfasst: eine Lookup-Tabelle, eine linearen Funktion, eine n-dimensionale Funktion, und eine technische Grundgleichung, welche den möglichen Messwerten (20) des physikalischen Sensors (3) jeweils einen zugehörigen Ausgabewerte (19) des virtuellen Sensors zuordnen.

5. Verfahren nach einem der vorhergehenden Ansprüche, wobei der Datensatz (11) in einer Functional Mock-Up Unit (12) bereitgestellt wird, und/oder wobei der virtuelle Sensor über den Functional Mock-Up Interface (FMI)-Standard in dem der Verarbeitungseinrichtung (5) betrieben wird.

6. Verfahren nach Anspruch 5, wobei die Functional-Mock-Up-Unit (12) umfasst: einen XML-Header, ein Executable, mindestens eine Library.

7. Verfahren nach Anspruch 5 oder 6, wobei in der Functional-Mock-Up Unit (12) kein Solver enthalten ist und bei dem Betreiben der Functional-Mock-Up Unit (12) in dem Automatisierungssystem (100) kein Solver verwendet wird.

8. Verfahren nach einem der vorhergehenden Ansprüche, wobei der Ausgabewert (19) des virtuellen Sensors durch den Messwert (20) des physikalischen Sensors (3) und den Datensatz (11) vollständig bestimmt ist.

9. Verfahren nach einem der vorhergehenden Ansprüche, wobei die Verarbeitungseinrichtung (5) Bestandteil einer der industriellen Anlage (1) übergeordnete Maschinenplattform ist, insbesondere eines Edge Computing Systems.

10. Verfahren nach einem der vorhergehenden Ansprüche, wobei das Anzeigen des bestimmten Ausgabewertes (19) ein Anzeigen des empfangenen Messwertes (20) umfasst.

11. Verfahren nach einem der vorhergehenden Ansprüche, wobei das Erzeugen des Datensatzes (11) durch ein Rechengerät durchgeführt wird, welches entfernt von dem Automatisierungssystem (1) ist, und wobei der Datensatz (11) zum Speichern in der Verarbeitungseinrichtung (5) an die Verarbeitungseinrichtung (5) übertragen wird.

12. Computerprogramm, umfassend Befehle, welche bei der Ausführung des Programms durch eine Rechenvorrichtung diese veranlassen, das Verfahren nach einem der Ansprüche 1 bis 10 auszuführen.
